# FASCICULE DE BREVET EUROPEEN

(11) **EP 4 253 248 B1**
(45) Date de publication et mention de la délivrance du brevet: **18.12.2024**
(21) Numéro de dépôt: 23158653.8
(22) Date de dépôt: 25.02.2023
(51) Int. Cl.: B64D 27/24, B64D 35/00, B64D 27/02

(54) **AVION À HÉLICES**
PROPELLERFLUGZEUG
PROPELLER AIRCRAFT

(30) Priorité: 29.03.2022 FR 2202814
(43) Date de publication de la demande: 04.10.2023
(73) Titulaire: AIRBUS HELICOPTERS, 13725 Marignane Cedex (FR)
(72) Inventeur: EGLIN, Paul, 13830 ROQUEFORT LA BEDOULE (FR); MALBURET, François, 13111 COUDOUX (FR)
(74) Mandataire: GPI Brevets

(56) Documents cités:
- EP-A1- 3 831 720
- WO-A1-2020/245363
- FR-A1- 2 949 434
- US-A1- 2018 354 632
- US-A1- 2021 047 047
- US-B2- 10 981 660

## Description

La présente invention concerne un avion à hélices.

Un avion peut comprendre deux hélices portées par deux ailes disposées transversalement de part et d'autre d'une cellule. Les deux hélices peuvent être mises en rotation indépendamment par deux moteurs thermiques respectifs. L'expression moteur thermique désigne un moteur fonctionnant à l'aide d'un carburant, tel que par exemple un moteur à piston, un turbopropulseur dénommé parfois « turboprop » ou encore un turbomoteur à turbine libre.

Un autre exemple d'avion comprend deux hélices montées tête-bêche dans une configuration parfois dénommée « push-pull » en langue anglaise. L'hydravion connu sous la marque « SeaStar^{®} » comporte deux hélices tête-bêche mues par deux moteurs disposés dans une nacelle commune déportée au-dessus d'une aile. Les deux hélices sont sensiblement alignées sur un axe parallèle à une direction longitudinale de l'avion.

A chaque instant, le rendement d'un moteur peut être évalué au travers de sa consommation spécifique, dénommée parfois « spécifie fuel consumption » en langue anglaise. La consommation spécifique d'un moteur quantifie le rendement énergétique d'un moteur par rapport à la puissance développée par le moteur.

La consommation spécifique en carburant d'un moteur et en particulier d'un turbomoteur ou d'un turbopropulseur tend à diminuer avec l'augmentation de la puissance développée par ce moteur, au moins tant que la puissance développée est inférieure à un seuil haut.

Sur un avion à deux hélices mises en rotation par deux moteurs respectifs, chaque moteur peut être dimensionné pour assurer le vol en cas de panne de l'autre moteur. Dès lors, dans des conditions normales de fonctionnement, les moteurs développent chacun une puissance inférieure à la puissance maximale pouvant être développable et dénommée plus simplement « puissance maximale ». A titre d'exemple, la puissance nécessaire au vol peut être répartie en vol de croisière de manière égale entre les hélices et chaque moteur peut développer une puissance sensiblement égale à la moitié de sa puissance maximale. Par conséquent, la consommation spécifique de chacun des moteurs n'est alors pas optimisée.

Pour optimiser une consommation spécifique, une solution consiste à prévoir une installation totalement électrique. L'article présent à l'adresse internet « https://www.usinenouvelle.com/article/promotion-ratee-pour-l-avion-electrique-un-biplace-pipistrel-atterrit-en-urgence-en-norvege.N875615 » le 11 février 2022 évoque un avion électrique à une hélice.

Un avion à deux hélices muni d'une hybridation thermique - électrique est évoqué dans l'article présent le 11 février 2022 à l'adresse internet « https://www.usinenouvelle.com/editorial/video-premier-vol-reussi-pour-l-avion-hybride-electrique-cassio-de-voltaero.N939521 ».

Les documents EP 3 831 720 A1, US 2018/354632 A1, US 10 981 660 B2, WO 2020/245363 A1, FR 2 949 434 A1, et US 2021/047047 A1 sont aussi connus.

La présente invention a alors pour objet de proposer un avion selon la revendication 1.

La chaîne de transmission d'énergie électrique peut comporter au moins un organe de stockage d'énergie électrique, éventuellement rechargeable.

Un tel organe de stockage d'énergie électrique peut comprendre au moins une batterie électrique, une pile, un accumulateur... L'organe de stockage d'énergie électrique peut être rechargeable pour par exemple permettre de stocker de l'énergie électrique produite par la première machine électrique ou un générateur électrique distinct. L'organe de stockage d'énergie électrique peut alimenter électriquement un démarreur si besoin, voire peut également alimenter électriquement la première machine électrique et/ou la deuxième machine électrique voire un autre moteur électrique si besoin.

L'avion peut comporter une dérive connectée à un actionneur, ledit actionneur étant configuré pour braquer ladite dérive dans une position prédéterminée dans la phase de vol à consommation spécifique optimisée pour contrer un moment de lacet généré sur l'avion par la première hélice en rotation.

L'invention et ses avantages apparaîtront avec plus de détails dans le cadre de la description qui suit avec des exemples donnés à titre illustratif en référence aux figures annexées qui représentent :
la figure 1, un schéma illustrant un avion selon un exemple non revendiqué,
la figure 2, un schéma illustrant un avion selon un exemple non revendiqué,
la figure 3, un schéma illustrant un avion selon l'invention,
la figure 4, une vue d'un avion selon un exemple non revendiqué,
la figure 5, un schéma illustrant un avion selon un exemple non revendiqué,
la figure 6, un schéma illustrant un avion selon un exemple non revendiqué,
la figure 7, un schéma illustrant un avion selon un exemple non revendiqué, et
la figure 8, un schéma illustrant un avion selon un exemple non revendiqué,

Les éléments présents dans plusieurs figures distinctes sont affectés d'une seule et même référence.

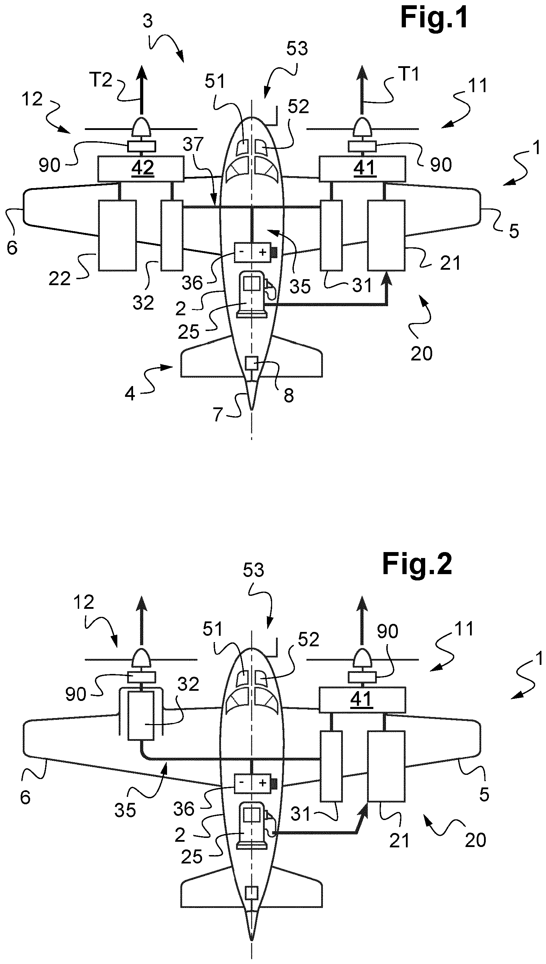

Les figures 1 à 8 illustrent des réalisations d'un avion 1.

Quelle que soit la réalisation et en référence à la figure 1, l'avion 1 comporte une cellule 2 qui s'étend longitudinalement d'un nez 3 vers une queue 4. La queue 4 peut comprendre une dérive 7, éventuellement déplaçable par un actionneur 8 et/ou des commandes de vol. La dérive 7 peut être totalement déplaçable ou peut comprendre un ou plusieurs volets qui sont mobiles par rapport à un moins une surface de dérive fixe.

L'avion 1 comporte en outre des ailes 5, 6 qui sont disposées transversalement de part et d'autre de la cellule 2. Les ailes 5,6 peuvent former conjointement une aile continue ou discontinue. Par ailleurs, l'avion 1 comporte une première hélice 11 et une deuxième hélice 12.

Selon les exemples des figures 1 à 3, la première hélice 11 et la deuxième hélice 12 sont agencées respectivement sur la première aile 5 et la deuxième aile 6.

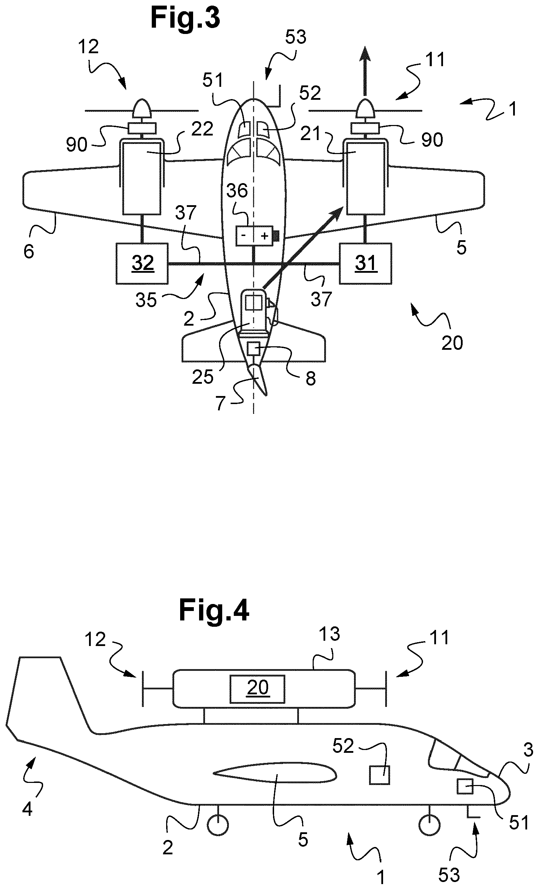

Selon l'exemple de la figure 4, la première hélice 11 et la deuxième hélice 12 peuvent être agencées tête-bêche. La première hélice 11 et la deuxième hélice 12 peuvent être contrarotatives et/ou agencées au dessus de la cellule 2 et/ou mises en rotation selon un même axe de rotation.

L'avion 1 comporte un dispositif de mise en drapeau pour au moins une hélice 11,12, tel que par exemple un embrayage 90.

La première hélice 11 et la deuxième hélice 12 peuvent être différentes, en présentant des diamètres et/ou des nombres de pales distincts, ou identiques.

Par ailleurs et en référence à la figure 1, l'avion 1 comporte une installation 20 pour mettre en rotation la première hélice 11 et la deuxième hélice 12 autour de leurs axes de rotation respectifs.

Cette installation 20 comporte un premier moteur thermique 21 coopérant avec une première machine électrique 31 pour mettre en rotation de la première hélice 11. De plus, une deuxième machine électrique 32 est configurée pour la mise en rotation de la deuxième hélice 12, en coopération avec un deuxième moteur thermique 22.

Le premier moteur thermique 21 et le deuxième moteur thermique 22 comprennent un turbomoteur à turbine libre.

L'avion 1 comporte dès lors au moins un réservoir 25 de carburant alimentant en carburant le premier moteur thermique 21 et le deuxième moteur thermique 22 éventuel.

Le premier moteur thermique 21 et le deuxième moteur thermique 22 éventuel peuvent être identiques ou différents.

La première machine électrique 31 et la deuxième machine électrique 32 peuvent éventuellement servir de démarreur pour le ou les moteurs thermiques 21,22.

Le premier moteur thermique 21 et le deuxième moteur thermique 22 peuvent comprendre un calculateur moteur. Le calculateur moteur peut notamment être configuré pour piloter un doseur de carburant en fonction d'un signal de commande reçu.

Un calculateur est une unité de traitement qui peut comprendre par exemple au moins un processeur et au moins une mémoire, au moins un circuit intégré, au moins un système programmable, au moins un circuit logique, ces exemples ne limitant pas la portée donnée à l'expression « unité de traitement ». Le terme processeur peut désigner aussi bien une unité centrale de traitement connue sous l'acronyme CPU, une unité graphique de traitement GPU, une unité digitale connue sous l'acronyme DSP, un microcontrôleur... La première machine électrique 31 et la deuxième machine électrique 32 sont configurées pour pouvoir fonctionner en mode moteur électrique ou en mode générateur électrique.

En outre, l'avion 1 est muni d'une chaîne de transmission d'énergie électrique 35 qui relie électriquement la première machine électrique 31 et la deuxième machine électrique 32. La chaîne de transmission d'énergie électrique 35 comporte une ou plusieurs liaisons électriques 37.

Par ailleurs, la chaîne de transmission d'énergie électrique 35 peut comporter au moins un organe de stockage d'énergie électrique 36, éventuellement rechargeable. Un tel organe de stockage d'énergie électrique 36 peut par exemple comprendre une pile électrique, une batterie électrique, un accumulateur électrique.

L'avion 1 peut fonctionner selon une phase de vol à consommation spécifique optimisée. Les moteurs thermiques 21, 22 et les machines électriques 31, 32 sont pilotés pour réaliser une telle phase de vol à consommation spécifique optimisée.

Selon un exemple, l'avion 1 comporte une interface homme-machine 51 pour mettre en oeuvre la phase de vol à consommation spécifique optimisée, par exemple de type bouton, levier, écran tactile ou autres. Suite à une sollicitation d'un pilote, l'interface homme-machine 51 émet un signal de commande porteur d'un ordre de mettre en oeuvre la phase de vol à consommation spécifique optimisée. Ce signal de commande peut être transmis à un ou des moteurs thermiques 21, 22 et aux machines électriques 31, 32 ou à un calculateur de l'avion 1.

Selon un autre exemple, l'avion 1 peut comprendre un calculateur de vol 52 en communication avec des senseurs 53 pour mettre automatiquement en oeuvre la phase de vol à consommation spécifique optimisée dans des conditions prédéterminées. Le calculateur de vol 52 est en liaison filaire ou non filaire avec le ou les moteurs thermiques 21, 22 et les machines électriques 31, 32. Le calculateur de vol 52 est configuré pour transmettre des signaux de commande requérant un mode de fonctionnement particulier au ou aux moteurs thermiques 21, 22 et aux machines électriques 31, 32. Le calculateur de vol 52 peut mémoriser une ou des lois de pilotage pour générer les signaux de commande.

A titre illustratif, un signal de commande transmis à un moteur thermique peut être porteur d'une puissance à développer par le moteur thermique et/ou d'un débit d'alimentation en carburant. Par exemple, le signal de commande est porteur d'une consigne de puissance, le débit de carburant étant piloté par un calculateur moteur pour correspondre à la consigne de puissance, le pas de l'hélice étant éventuellement adapté de manière usuelle pour consommer la puissance transmise au régime ciblé. Eventuellement, un signal de commande transmis à une machine électrique peut être porteur d'un ordre de fonctionnement en mode moteur ou en mode générateur électrique

Les figures 1 et 2 illustrent une première alternative d'avion qui n'entre pas dans le cadre des revendications.

Selon cette première alternative, le premier moteur thermique 21 et la première machine électrique 31 sont connectés mécaniquement à une première chaîne de transmission de puissance 41. La première chaîne de transmission de puissance 41 peut comporter au moins un arbre, au moins une roue libre, au moins un embrayage, au mois une roue de conjugaison...

Par exemple, la première chaîne de transmission de puissance 41 peut comporter une première entrée connectée à un arbre de puissance du premier moteur thermique 21, ainsi qu'une deuxième entrée connectée à la première machine électrique 31, et une sortie connectée à la première hélice 11. La première chaîne de transmission de puissance 41 peut comporter une roue de conjugaison reliée cinématiquement à la première entrée, à la deuxième entrée et à la première hélice 11. Une roue libre ou un embrayage peut être interposé entre la roue de conjugaison et le premier moteur thermique 21.

La première machine électrique 31 est alors une machine pouvant fonctionner en mode moteur électrique ou en mode générateur électrique. En particulier, la première machine électrique 31 est configurée pour fonctionner en mode générateur électrique durant une phase de vol à consommation spécifique optimisée.

Selon une première variante de la première alternative illustrée sur la figure 1, l'avion 1 comporte un deuxième moteur thermique 22 connecté à une deuxième chaîne de transmission de puissance 42 mettant en rotation la deuxième hélice 12.

La deuxième chaîne de transmission de puissance 42 peut comporter au moins un arbre, au moins une roue libre, au moins un embrayage, au mois une roue de conjugaison... Par exemple, la deuxième chaîne de transmission de puissance 42 peut comporter une première entrée connectée à un arbre de puissance du deuxième moteur thermique 22, ainsi qu'une deuxième entrée connectée mécaniquement à la deuxième machine électrique 32, et une sortie connectée à la deuxième hélice 12. La deuxième chaîne de transmission de puissance 42 peut comporter une roue de conjugaison reliée cinématiquement à la première entrée, à la deuxième entrée et à la deuxième hélice12. Une roue libre ou un embrayage peut être interposé entre la roue de conjugaison et le deuxième moteur thermique 22.

La deuxième machine électrique 32 est alors une machine pouvant fonctionner en mode moteur électrique ou en mode générateur électrique. En particulier, la deuxième machine électrique 32 est configurée pour fonctionner en mode moteur électrique durant une phase de vol à consommation spécifique optimisée.

Ainsi, chaque moteur thermique 21,22 peut former le premier moteur thermique 21 ou le deuxième moteur thermique 22 et chaque machine électrique 31,32 peut former la première machine électrique 31 ou la deuxième machine électrique 32.

Dès lors, selon le procédé appliqué, lorsqu'une phase de vol à consommation spécifique optimisée est mise en oeuvre, sur ordre d'une interface ou d'un calculateur de vol par exemple, le premier moteur thermique 21 est piloté par son calculateur moteur pour développer une puissance, par exemple prédéterminée, élevée voire proche de sa puissance maximale. Le premier moteur thermique 21 met alors en mouvement les organes mobiles, des arbres et des engrenages notamment, de la première chaîne de transmission de puissance 41. La première hélice 11 est ainsi mise en rotation.

De plus, la première machine électrique 31 est pilotée pour fonctionner en mode générateur électrique. La première machine électrique 31 est mise en mouvement par la première chaîne de transmission de puissance 41 pour générer de l'énergie électrique injectée dans la chaîne de transmission d'énergie électrique 35.

A l'inverse, le deuxième moteur thermique 22 est mis à l'arrêt ou au ralentit. La deuxième machine électrique 32 est pilotée pour fonctionner en mode moteur électrique. La deuxième machine électrique 32 met en mouvement la deuxième hélice 12 par la deuxième chaîne de transmission de puissance 42 à partir de l'énergie électrique fournie par la chaîne de transmission d'énergie électrique 35. Le cas échéant, une roue libre de la deuxième chaîne de transmission de puissance 42 déconnecte cinématiquement la deuxième hélice 12 du deuxième moteur thermique 22.

A titre illustratif, le premier moteur thermique 11 développe une puissance maximale Pmax et le deuxième moteur thermique 12 développe une puissance nulle. Sensiblement la moitié de cette puissance maximale est utilisée pour que la première hélice 11 développe alors une première poussée T1. L'autre moitié de cette puissance maximale est utilisée pour générer de l'énergie électrique avec la première machine électrique 31. Cette énergie électrique peut en tout ou partie alimenter électriquement la deuxième machinée électrique 32 qui met en mouvement la deuxième hélice 12 pour produire une deuxième poussée T2 sensiblement égale à la première poussée T1.

Ainsi, au lieu d'avoir deux moteurs thermiques qui développent chacune une puissance de l'ordre de la moitié de leur puissance maximale, un moteur thermique est à l'arrêt ou au ralenti et l'autre moteur thermique développe une puissance proche de sa puissance maximale. Il en résulte une optimisation de la consommation spécifique des moteurs thermiques.

Selon une deuxième variante de la première alternative illustrée sur la figure 2, la deuxième machine électrique 32 comporte un mode de fonctionnement en tant que moteur électrique. Cette deuxième machine électrique 32 est reliée mécaniquement à la deuxième hélice 12, directement ou via une deuxième chaîne de transmission de puissance, la deuxième machine électrique 32 recevant une énergie électrique provenant de la chaîne de transmission d'énergie électrique 35. Dans ce cas l'avion comporte un seul moteur thermique pour l'entraînement des hélices.

A tout moment, l'avion fonctionne de la même manière que la première variante de la première alternative durant la phase de fonctionnement à consommation spécifique optimisée. Le cas échéant, un organe de stockage d'énergie électrique 36 peut fournir transitoirement une puissance électrique à la première machine électrique 11 et/ou à la deuxième machine électrique 12, par exemple en cas de panne du premier moteur thermique 21.

La figure 3 illustre une deuxième alternative d'avion selon l'invention.

Selon cette deuxième alternative, le premier moteur thermique 21 être connecté mécaniquement à la première machine électrique 31, la première machine électrique 31 pouvant fonctionner en mode moteur électrique ou en mode générateur électrique.

La première machine électrique 21 comporte un arbre connecté à un arbre d'un générateur de gaz du premier moteur thermique 11, à l'instar d'un générateur-démarreur usuel d'un turbomoteur.

De même, un deuxième moteur thermique 22 est connecté mécaniquement à la deuxième machine électrique 32, la deuxième machine électrique 32 pouvant fonctionner en mode moteur électrique ou en mode générateur électrique.

La deuxième machine électrique 22 comporte un arbre connecté à un arbre d'un générateur de gaz du deuxième moteur thermique 21, à l'instar d'un générateur-démarreur usuel d'un turbomoteur.

Durant une phase de vol à forte puissance, chaque moteur thermique 21,22 peut développer une puissance transmise indépendamment à l'hélice 11,12 respective.

Durant une phase de vol à consommation spécifique optimisée, sur ordre d'une interface ou d'un contrôleur par exemple, la deuxième hélice 12 est mise en drapeau par son dispositif de mise en drapeau 90. Par exemple, un embrayage présent entre la deuxième hélice 12 et le deuxième moteur thermique 22 est débrayé.

De plus, le premier moteur thermique 21 développe une puissance pour mettre en rotation la première hélice 11. Par suite, le premier moteur thermique 21 développe une puissance proche de sa puissance maximale alors que le deuxième moteur thermique 22 est à l'arrêt ou au ralenti.

En parallèle, l'actionneur 8 éventuel peut déplacer la dérive 7 dans une position prédéterminée pour contrer un moment de lacet généré sur la cellule 2 par la rotation de la première hélice 11.

La figure 4 illustre une troisième alternative d'avion qui n'entre pas dans le cadre des revendications. La première hélice 11 et la deuxième hélice 12 sont agencées tête-bêche selon une configuration « push-pull ».

Par exemple, l'installation 20 est agencée au moins en partie dans une nacelle 13 présente au dessus de la cellule 2.

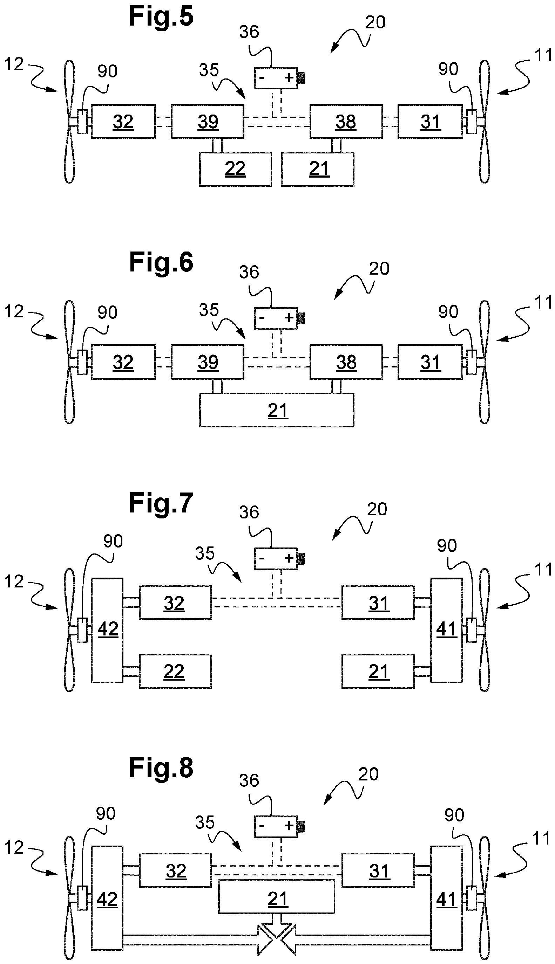

Selon des variantes d'agencement en série de la troisième alternative illustrée sur les figures 5 et 6, la première machine électrique 31 est configurée pour fonctionner au moins en mode moteur électrique, voire uniquement en mode moteur électrique. Les liaisons électriques sont illustrées en traits discontinus, les liaisons mécaniques en traits continus. La première machine électrique 31 est connectée mécaniquement à la première hélice 11 directement ou indirectement par une première chaîne de transmission de puissance.

De même, la deuxième machine électrique 32 est configurée pour fonctionner au moins en mode moteur électrique, voire uniquement en mode moteur électrique. La deuxième machine électrique 32 est connectée mécaniquement à la deuxième hélice 12 directement ou indirectement par une deuxième chaîne de transmission de puissance.

La chaîne de transmission d'énergie électrique 35 comporte en outre au moins un générateur d'énergie électrique 38,39 coopérant avec au moins un moteur thermique 21 ou 22.

Ainsi, le premier moteur thermique 21 est connecté à un premier générateur d'énergie électrique 38 de la chaîne de transmission d'énergie électrique 35.

Selon une première variante d'agencement en série de la troisième alternative de la figure 5, un deuxième moteur thermique 22 est connecté à un deuxième générateur d'énergie électrique 39 de la chaîne de transmission d'énergie électrique 35.

Durant une phase de vol à forte puissance, chaque moteur thermique 21, 22 peut développer une puissance transmise indépendamment au générateur d'énergie électrique 38, 39 respectif. Les machines électriques 31, 32 mettent indépendamment en rotation les hélices 11, 12 respectives.

Durant une phase de vol à consommation spécifique optimisée, sur ordre d'une interface ou d'un contrôleur par exemple, le deuxième moteur thermique 22 est à l'arrêt ou au ralenti alors que le premier moteur thermique 21 développe une puissance élevée pour alimenter électriquement la première machine électrique 31 et la deuxième machine électrique 32. Par suite, le premier moteur thermique 21 développe une puissance proche de sa puissance maximale alors que le deuxième moteur thermique 22 est à l'arrêt ou au ralenti.

Selon une deuxième variante d'agencement en série de la troisième alternative de la figure 6, le premier moteur thermique 21 est connecté à un deuxième générateur d'énergie électrique 39 de la chaîne de transmission d'énergie électrique 35.

Selon des variantes d'agencement en parallèle de la troisième alternative illustrée sur les figures 7 et 8, la première machine électrique 31 est configurée pour fonctionner en mode moteur électrique et générateur électrique. Les liaisons électriques sont illustrées en traits discontinus, les liaisons mécaniques en traits continus.

En outre, la première machine électrique 31 et le premier moteur thermique 21 sont connectés mécaniquement à une première chaîne de transmission de puissance 41, par exemple du type décrit précédemment, mettant en rotation la première hélice 11.

Par ailleurs, la deuxième machine électrique 32 est configurée pour fonctionner en mode moteur électrique et générateur électrique. La deuxième machine électrique 32 est connectée mécaniquement à une deuxième chaîne de transmission de puissance 42, par exemple du type décrit précédemment, mettant en rotation la deuxième hélice 12.

Selon une première variante d'agencement en parallèle de la troisième alternative illustrée sur la figure 7, un deuxième moteur thermique 22 est connecté à la deuxième chaîne de transmission de puissance 42.

Durant une phase de vol à forte puissance, chaque moteur thermique 21, 22 peut développer une puissance transmise indépendamment à l'hélice 11, 12 respective. Les machines électriques 31, 32 peuvent être inactives ou peuvent fonctionner en mode moteur voire générateur électrique.

Durant une phase de vol à consommation spécifique optimisée, sur ordre d'une interface ou d'un contrôleur par exemple, le deuxième moteur thermique 22 est à l'arrêt ou au ralenti alors que le premier moteur thermique 21 développe une puissance élevée pour entraîner la première hélice 11 et pour mettre en mouvement la première machine électrique 31 qui fonctionne en mode générateur électrique. A l'inverse, la deuxième machine électrique 32 fonctionne en mode moteur électrique.

Selon une deuxième variante d'agencement en parallèle de la troisième alternative illustrée sur la figure 8, le premier moteur thermique 21 est connecté à la première chaîne de transmission de puissance 41 et à la deuxième chaîne de transmission de puissance 42.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles.

## Revendications

1. Avion (1) comportant une première hélice (11) et une deuxième hélice (12), l'avion (1) comprenant un premier moteur thermique (21) ainsi qu'une première machine électrique (31) configurés pour la mise en rotation de la première hélice (11), ledit avion (1) comprenant au moins une deuxième machine électrique (32) configurée pour la mise en rotation de la deuxième hélice (12), ledit avion (1) ayant une chaîne de transmission d'énergie électrique (35) reliant électriquement la première machine électrique (31) et la deuxième machine électrique (32), le premier moteur thermique (21) étant connecté mécaniquement à la première machine électrique (31), le premier moteur thermique (21) étant un turbomoteur à turbine libre ayant un générateur de gaz, la première machine électrique (31) comportant un arbre connecté à un arbre du générateur de gaz du premier moteur thermique (21), la première machine électrique (31) pouvant fonctionner en mode moteur électrique ou en mode générateur électrique, la deuxième machine électrique (32) pouvant fonctionner en mode moteur électrique ou en mode générateur électrique, la deuxième machine électrique (32) étant connectée à un deuxième moteur thermique (22), le deuxième moteur thermique (22) étant un turbomoteur à turbine libre ayant un générateur de gaz, la deuxième machine électrique (32) comportant un arbre connecté à un arbre du générateur de gaz du deuxième moteur thermique (22), le deuxième moteur thermique (22) étant connecté à la deuxième hélice (12), l'avion comportant un dispositif de mise en drapeau de ladite deuxième hélice tel que durant une phase de vol à consommation spécifique optimisée le premier moteur thermique (21) est configuré pour mettre en rotation la première hélice (11), et le dispositif de mise en drapeau est configuré pour mettre en drapeau la deuxième hélice.

2. Avion selon la revendication 1, la chaîne de transmission d'énergie électrique (35) comportant au moins un organe de stockage d'énergie électrique (36).

3. Avion selon l'une quelconque des revendications 1 à 2, l'avion (1) comportant une dérive (7) connectée à un actionneur (8), ledit actionneur (8) étant configuré pour braquer ladite dérive (7) dans une position prédéterminée dans la phase de vol à consommation spécifique optimisée pour contrer un moment de lacet généré sur l'avion (1) par la première hélice (11) en rotation.

## Patentansprüche

1. Flugzeug (1) mit einem ersten Propeller (11) und einem zweiten Propeller (12), wobei das Flugzeug (1) einen ersten Verbrennungsmotor (21) sowie eine erste elektrische Maschine (31) umfasst, die konfiguriert sind, um den ersten Propeller (11) in Drehung zu versetzen, wobei das Flugzeug (1) mindestens eine zweite elektrische Maschine (32) umfasst, die konfiguriert ist, um den zweiten Propeller (12) in Drehung zu versetzen, wobei das Flugzeug (1) eine elektrische Energieübertragungskette (35) aufweist, die die erste elektrische Maschine (31) und die zweite elektrische Maschine (32) elektrisch verbindet, wobei der erste Verbrennungsmotor (21) mechanisch mit der ersten elektrischen Maschine (31) verbunden ist, wobei der erste Verbrennungsmotor (21) ein Gasturbinentriebwerk mit freier Turbine ist, das einen Gasgenerator umfasst, wobei die erste elektrische Maschine (31) eine Welle aufweist, die mit einer Welle des Gasgenerators des ersten Verbrennungsmotors (21) verbunden ist, wobei die erste elektrische Maschine (31) im Elektromotor-Modus oder im Stromgenerator-Modus betreibbar ist, die zweite elektrische Maschine (32) im Elektromotor-Modus oder im Stromgenerator-Modus betreibbar ist, die zweite elektrische Maschine (32) mit einem zweiten Verbrennungsmotor (22) verbunden ist, der zweite Verbrennungsmotor (22) ein Gasturbinentriebwerk mit freier Turbine ist, das einen Gasgenerator umfasst, die zweite elektrische Maschine (32) eine Welle aufweist, die mit einer Welle des Gasgenerators des zweiten Verbrennungsmotors (22) verbunden ist, der zweite Verbrennungsmotor (22) mit dem zweiten Propeller (12) verbunden ist, und das Flugzeug eine Vorrichtung zum Versetzen des zweiten Propellers in Segelstellung aufweist, so dass während einer Flugphase mit optimiertem spezifischen Verbrauch der erste Verbrennungsmotor (21) konfiguriert ist, um den ersten Propeller (11) in Drehung zu versetzen, und die Vorrichtung zum Versetzen in Segelstellung konfiguriert ist, um den zweiten Propeller in Segelstellung zu versetzen.

2. Flugzeug nach Anspruch 1,
bei dem die elektrische Energieübertragungskette (35) mindestens ein Speicherorgan für elektrische Energie (36) umfasst.

3. Flugzeug nach einem der Ansprüche 1 bis 2,
wobei das Flugzeug (1) ein Seitenleitwerk (7) umfasst, das mit einem Aktuator (8) verbunden ist, wobei der Aktuator (8) konfiguriert ist, um das Seitenleitwerk (7) in der Flugphase mit optimiertem spezifischem Verbrauch in eine vorgegebene Position zu lenken, um einem an dem Flugzeug (1) durch den sich drehenden ersten Propeller (11) erzeugten Giermoment entgegenzuwirken.

## Claims

1. Aircraft (1) comprising a first propeller (11) and a second propeller (12),
the aircraft (1) comprising a first thermal engine (21) and a first electric machine (31) configured to rotate the first propeller (11), said aircraft (1) comprising at least a second electric machine (32) configured to rotate the second propeller (12), said aircraft (1) having an electric energy transmission chain (35) electrically connecting the first electric machine (31) and the second electric machine (32), the first thermal engine (21) being mechanically connected to the first electric machine (31), the first thermal engine (21) being a free turbine turboshaft with a gas generator, the first electric machine (31) comprising a shaft connected to a shaft of the gas generator of the first thermal engine (21), the first electric machine (31) being capable of operating in electric motor mode or electric generator mode, the second electric machine (32) being capable of operating in electric motor mode or electric generator mode, the second electric machine (32) being connected to a second thermal engine (22), the second thermal engine (22) being a free turbine turboshaft with a gas generator, the second electric machine (32) comprising a shaft connected to a shaft of the gas generator of the second thermal engine (22), the second thermal engine (22) being connected to the second propeller (12), the aircraft comprising a feathering device for said second propeller such that during a flight phase optimized for specific fuel consumption, the first thermal engine (21) is configured to rotate the first propeller (11) and the feathering device is configured to feather the second propeller.

2. Aircraft according to Claim 1,
the electric energy transmission chain (35) comprising at least one electric energy storage device (36).

3. Aircraft according to any one of Claims 1 to 2,
the aircraft (1) comprising a rudder (7) connected to an actuator (8), said actuator (8) being configured to steer said rudder (7) in a predetermined position during the flight phase optimized for specific fuel consumption to counteract a yaw moment generated on the aircraft (1) by the rotating first propeller (11).
